# EUROPEAN PATENT APPLICATION

(11) **EP 4 648 120 A1**
(43) Date of publication of application: **12.11.2025**
(21) Application number: 25170329.4
(22) Date of filing: 14.04.2025
(51) Int. Cl.: H01M 4/131, C01G 53/502, H01M 4/133, H01M 4/36, H01M 4/38, H01M 4/505, H01M 4/525, H01M 4/587, H01M 4/134

(54) **POSITIVE ELECTRODE ACTIVE MATERIAL, POSITIVE ELECTRODE PLATE, AND NON-AQUEOUS ELECTROLYTE SECONDARY BATTERY**

(30) Priority: 09.05.2024 JP 2024076603
(71) Applicant: Prime Planet Energy & Solutions, Inc., Chuo-ku, Tokyo 103-0022 (JP)
(72) Inventor: TAKAMORI, Shunya, Tokyo, 103-0022 (JP)
(74) Representative: Kuhnen & Wacker Patent- und Rechtsanwaltsbüro PartG mbB

(57) **Abstract**

A positive electrode active material comprises a first active material represented by a formula (I) and a second active material represented by a formula (II). The formula (I) and the formula (II) are as specified in the claims. Each of the first active material and the second active material is secondary particles each consisting of 50 or more primary particles aggregated together. An average particle size (D₁50) of the first active material is smaller than an average particle size (D₂50) of the second active material.

## Description

### CROSS REFERENCE TO RELATED APPLICATIONS

This nonprovisional application is based on Japanese Patent Application No. 2024-076603 filed on May 9, 2024, with the Japan Patent Office, the entire contents of which are hereby incorporated by reference.

### BACKGROUND OF THE DISCLOSURE

### Field of the Disclosure

The present invention relates to a positive electrode active material, a positive electrode plate comprising the same, and a non-aqueous electrolyte secondary battery having the positive electrode plate.

### Description of the Background Art

It is known to use a positive electrode plate comprising a lithium-(transition metal) composite oxide as a positive electrode active material, on a current collector in a secondary battery. Japanese Patent Laying-Open No. 2012-59527 discloses a positive electrode for a secondary battery, comprising two types of lithium-(transition metal) composite oxides that are different in the molar ratio of lithium to transition metal.

### SUMMARY OF THE DISCLOSURE

The present disclosure aims at providing a positive electrode active material that is capable of achieving enhanced volumetric energy density and good input-output properties of a non-aqueous electrolyte secondary battery, a positive electrode plate comprising the same, and a non-aqueous electrolyte secondary battery having the positive electrode plate.
[1] A positive electrode active material comprising:
   a first active material represented by a formula (I) below; and
   a second active material represented by a formula (II) below, wherein
   each of the first active material and the second active material is secondary particles each consisting of 50 or more primary particles aggregated together, and
   an average particle size (D₁50) of the first active material is smaller than an average particle size (D₂50) of the second active material:

      Li₁₊ₐ₁Niₓ₁Mn_{y1}M1_{z1}O₂ (I)

      Li₁₊ₐ₂Niₓ₂Mn_{y2}M2_{z2}O₂ (II)
   where
   M1 and M2 are independently one or more metallic elements selected from the group consisting of Co, Al, Mg, Ca, Ti, V, Cr, Fe, Cu, Zn, Zr, Nb, Mo, Ta, and W,
   0.13≤a1≤0.33, 0≤x1≤0.3, 0.47≤y1≤0.67, 0≤z1≤0.3, and a1+x1+y1+z1=1 are satisfied, and
   -0.1≤a2≤0.1, 0.6≤x2≤1, 0≤y2≤0.3, 0≤z2≤0.3, and a2+x2+y2+z2=1 are satisfied.
[2] The positive electrode active material according to [1], wherein the average particle size (D₁50) of the first active material is from 1 to 4 µm.
[3] The positive electrode active material according to [1] or [2], wherein the average particle size (D₂50) of the second active material is from 2 to 15 µm.
[4] The positive electrode active material according to any one of [1] to [3], wherein a ratio (D₂50/D₁50) of the average particle size (D₂50) of the second active material to the average particle size (D₁50) of the first active material is 2 or more.
[5] The positive electrode active material according to any one of [1] to [4], wherein a content of the first active material is from 60 to 95 mass%.
[6] A positive electrode plate comprising a positive electrode active material layer including the positive electrode active material according to any one of [1] to [5].
[7] The positive electrode plate according to [6], wherein
   the positive electrode active material layer further includes carbon nanotubes, and
   a content of the carbon nanotubes relative to a total amount of the first active material in the positive electrode active material layer is from 2 to 6 mass%.
[8] A non-aqueous electrolyte secondary battery comprising an electrode assembly, wherein
   the electrode assembly has the positive electrode plate according to [6] or [7].
[9] The non-aqueous electrolyte secondary battery according to [8], wherein
   the electrode assembly further has a negative electrode plate having a negative electrode active material layer,
   the negative electrode active material layer includes a negative electrode active material, and
   the negative electrode active material includes a carbon-based active material and a Si-containing active material.
[10] The non-aqueous electrolyte secondary battery according to [9], wherein a content of the Si-containing active material in the negative electrode active material relative to a total amount of the negative electrode active material is from 3 to 15 mass%.
[11] The non-aqueous electrolyte secondary battery according to [9] or [10], wherein the Si-containing active material is one or more types selected from the group consisting of Si, SiOx (x=0.5 to 1.5), and SiC.

The foregoing and other objects, features, aspects and advantages of the present invention will become more apparent from the following detailed description of the present invention.

### DESCRIPTION OF THE PREFERRED EMBODIMENTS

Herein, a numerical range such as "from x to y" includes the upper limit and the lower limit, unless otherwise specified. That is, "from x to y" means a numerical range of "not less than x and not more than y". Any numerical value selected from a certain numerical range may be used as a new upper limit or a new lower limit. For example, any numerical value from a certain numerical range may be combined with any numerical value described in another location of the present specification or in a table to set a new numerical range.

### (Positive Electrode Active Material)

A positive electrode active material according to the present embodiment (hereinafter also called "the present positive electrode active material") is usable in a positive electrode plate of a non-aqueous electrolyte secondary battery (hereinafter also called "a secondary battery") such as a lithium-ion battery.

The present positive electrode active material includes a first active material represented by a formula (I) below and a second active material represented by a formula (II) below.

Li₁₊ₐ₁Niₓ₁Mn_{y1}M1_{z1}O₂ (I)

Li₁₊ₐ₂Niₓ₂Mn_{y2}M2_{z2}O₂ (II)

[In the formula (I) and the formula (II),
M1 and M2 are independently one or more metallic elements selected from the group consisting of Co, Al, Mg, Ca, Ti, V, Cr, Fe, Cu, Zn, Zr, Nb, Mo, Ta, and W,
0.13≤a1≤0.33, 0≤x1≤0.3, 0.47≤y1≤0.67, 0≤z1≤0.3, and a1+x1+y1+z1=1 are satisfied, and
-0.1≤a2≤0.1, 0.6≤x2≤1, 0≤y2≤0.3, 0≤z2≤0.3, and a2+x2+y2+z2=1 are satisfied.]

Each of the first active material and the second active material is secondary particles each consisting of 50 or more primary particles aggregated together. An average particle size (D₁50) of the first active material is smaller than an average particle size (D₂50) of the second active material.

By using the present positive electrode active material, it is possible to achieve enhanced volumetric energy density and good input-output properties in the secondary battery.

The first active material is a lithium-(transition metal) composite oxide. The first active material is a lithium-rich positive electrode active material with a high Li content rate. The first active material is simply required to be a compound represented by the above-mentioned formula (I). In the formula (I), M1 preferably includes one or more types selected from the group consisting of Co, Al, Mg, Ti, and Fe, and more preferably, it includes Co. In the formula (I), a1 may be 0.14≤a1≤0.30, or may be 0.15≤a1≤0.25, or may be 0.16≤a1≤0.20. In the formula (I), x1 may be 0.00≤x1≤0.30, or may be 0.00<x1≤0.25, or may be 0.05≤x1≤0.20, or may be 0.10≤x1≤0.17. In the formula (I), y1 may be 0.48≤y1≤0.65, or may be 0.50≤y1≤0.67, or may be 0.50≤y1≤0.60. In the formula (I), z1 may be 0.00≤z1≤0.30, or may be 0.00<z1≤0.25, or may be 0.05≤z1≤0.20, or may be 0.10≤z1≤0.18.

The second active material is a lithium-(transition metal) composite oxide. The second active material is a positive electrode active material with a high Ni content rate. The second active material is simply required to be a compound represented by the above-mentioned formula (II). In the formula (II), M2 preferably includes one or more types selected from the group consisting of Co, Al, Mg, Ti, and Fe, and more preferably, it includes Co. In the formula (II), a2 may be -0.10≤a2≤0.10, or may be - 0.08≤a2≤0.08, or may be -0.05≤a2≤0.05, or may be -0.02≤a2≤0.02. In the formula (II), x2 may be 0.60≤x2≤1.00, or may be 0.65≤x2<11.00, or may be 0.70≤x2≤0.95, or may be 0.75≤x2≤0.90, or may be 0.78≤x2≤0.85. In the formula (II), y2 may be 0.00≤y2≤0.30, or may be 0.00<y2≤0.30, or may be 0.05≤y2≤0.20, or may be 0.07≤y2≤0.15. In the formula (II), z2 may be 0.00≤z2≤0.30, or may be 0.00<z2≤0.30, or may be 0.05≤z2≤0.20, or may be 0.07≤z2≤0.17.

The composition of the first active material and the second active material can be determined by high-frequency inductively coupled plasma (ICP) emission spectroscopy, for example.

Each of the first active material and the second active material is secondary particles each consisting of 50 or more primary particles aggregated together. The number of primary particles aggregated together to form each secondary particle of the first active material and the second active material, respectively, may be 100 or more, or may be 1000 or more; and it is usually 5×10⁶ or less, and it may be 5×10⁵ or less. The number of primary particles aggregated together for the first active material may be the same as, or may be different from, the number of primary particles aggregated together for the second active material. For example, the number of primary particles aggregated together for the first active material may be either greater or smaller than the number of primary particles aggregated together for the second active material. Herein, the number of primary particles aggregated together can be determined in an SEM image captured with a scanning electron microscope (hereinafter also called "SEM"), for example.

Since the first active material is secondary particles each consisting of many primary particles aggregated together, it has a large specific surface area and can enhance specific capacity, so it tends to enhance volumetric energy density of the secondary battery. The second active material is also secondary particles each consisting of many primary particles aggregated together, so the lithium-ion diffusion distance within each particle constituting the second active material can be shorter than when the second active material is single particles. In addition, the lithium-ion diffusion path tends to be less complex. For these reasons, when the present positive electrode active material includes the second active material, a secondary battery with good input-output properties tends to be obtained.

The average particle size (D₁50) of the first active material is smaller than the average particle size (D₂50) of the second active material. Herein, each of the average particle size (D₁50) and the average particle size (D₂50) is a particle size in volume-based particle size distribution at which cumulative frequency of particle sizes accumulated from the small size side reaches 50%. The volume-based particle size distribution can be measured with a laser-diffraction particle size distribution analyzer.

The first active material has high specific capacity and low lithium-ion diffusivity inside the active material, as compared to the second active material. Therefore, by setting the average particle size (D₁50) to be smaller than the average particle size (D₂50), it is possible to reduce the lithium-ion diffusion distance inside each particle constituting the first active material. As a result, a secondary battery with good input-output properties tends to be obtained.

The ratio (D₂50/D₁50) of the average particle size (D₂50) of the second active material to the average particle size (D₁50) of the first active material may be 2.0 or more; preferably, it is 2 or more, and it may be 2.2 or more; preferably, it is 2.4 or more; and usually, it is 7.0 or less. The ratio (D₂50/D₁50) may be from 2.0 to 7.0, or may be from 2.2 to 6.5, or may be from 2.4 to 6.0, or may be from 2.5 to 5.8, or may be from 3.0 to 5.0.

As the ratio (D₂50/D₁50) decreases, the difference between the average particle size of the first active material and the average particle size of the second active material decreases. Due to this, packing properties of the first active material and the second active material become degraded, and the porosity of a positive electrode active material layer that is formed using these active materials increases. As a result, electronic conductivity of the positive electrode active material layer decreases, and input-output properties of the secondary battery tend to be degraded. When the ratio (D₁50/D₂50) falls within the above-mentioned range, a secondary battery with good input-output properties tends to be obtained.

The average particle size (D₁50) of the first active material may be from 1.0 to 4.0 µm; preferably, it is from 1 to 4 µm, and it may be from 1.5 to 3.5 µm, or may be from 2.0 to 3.0 µm. The average particle size (D₂50) of the second active material may be from 2.0 to 15.0 µm; preferably, it is from 2 to 15 µm, more preferably from 6.0 to 15.0 µm, and it may be from 7.0 to 14.0 µm, or may be from 8.0 to 12.0 µm.

In the present positive electrode active material, the content of the first active material is preferably higher than the content of the second active material. The content of the first active material in the present positive electrode active material is preferably from 60 to 95 mass%, more preferably from 65 to 90 mass%, and it may be from 70 to 85 mass%, or may be from 75 to 82 mass%.

The first active material has high specific capacity and high resistance as compared to the second active material. As the content of the first active material increases and thereby the content ratio of the first active material increases, the resistance of the positive electrode active material increases and, thereby, electronic conductivity tends to be degraded. Furthermore, as the content ratio of the first active material increases, packing properties of the first active material and the second active material tend to be degraded. As a result, the positive electrode active material layer tends not to be compressed well during formation thereof, and the porosity of the positive electrode active material layer tends to increase. When electronic conductivity is degraded and the porosity of the positive electrode active material layer increases as mentioned above, input-output properties of the secondary battery tend to be degraded. When the content of the first active material decreases and thereby the content ratio of the second active material increases, volumetric energy density of the secondary battery tends to decrease. When the content of the first active material falls within the above-mentioned range, a secondary battery with good input-output properties and enhanced volumetric energy density tends to be obtained.

In the positive electrode active material, the content of the second active material may be from 5 to 40 mass%, or may be from 10 to 35 mass%, or may be from 15 to 30 mass%, or may be from 18 to 25 mass%. Each of the content of the first active material and the content of the second active material refers to the amount relative to the total amount of the positive electrode active material which is regarded as 100 mass%.

The present positive electrode active material may include only the first active material and the second active material, or may further include another active material in addition to the first active material and the second active material. The total content of the first active material and the second active material in the present positive electrode active material relative to the total amount of the present positive electrode active material may be from 85 to 100 mass%, or may be from 90 to 100 mass%, or may be from 92 to 99 mass%, or may be from 95 to 98 mass%.

### (Positive Electrode Plate)

A positive electrode plate according to the present embodiment (hereinafter also called "the present positive electrode plate") is usable in a secondary battery. The present positive electrode plate has a positive electrode active material layer that includes the present positive electrode active material. Since it includes the present positive electrode active material, the present positive electrode plate can achieve enhanced volumetric energy density and good input-output properties of the secondary battery.

The present positive electrode plate can have the positive electrode active material layer on one side or both sides of a positive electrode current-collecting foil sheet. The positive electrode current-collecting foil sheet is a metal foil sheet that is made of an aluminum material such as aluminum and aluminum alloy, for example. The positive electrode active material layer further includes at least one of a conductive aid and a binder, preferably both a conductive aid and a binder, in addition to the present positive electrode active material.

Examples of the conductive aid include a carbon material. The carbon material may be one or more types selected from the group consisting of fibrous carbon, carbon black (such as acetylene black, Ketjenblack), coke, and activated carbon, for example. Examples of the fibrous carbon include carbon nanotubes (hereinafter also called CNTs). The CNTs may be single-walled carbon nanotubes (SWCNTs), or may be multi-walled carbon nanotubes such as double-walled carbon nanotubes (DWCNTs). The conductive aid can include one, two, or more types of the above-mentioned conductive aids.

Preferably, the positive electrode active material layer further includes CNTs in addition to the present positive electrode active material. The content of CNTs relative to the total amount of the first active material in the positive electrode active material layer may be from 2.0 to 6.0 mass%; preferably, it is from 2 to 6 mass%, and it may be from 2.2 to 5.8 mass%, or may be from 2.5 to 5.6 mass%; more preferably, it is from 2.7 to 5.5 mass%, and it may be from 3.0 to 5.0 mass%, or may be from 3.5 to 4.5 mass%.

Along with occlusion and release of lithium ions, oxygen atoms can be deserted from the first active material and thereby oxygen can be produced. Oxygen thus produced from the first active material tends to cause oxidative degradation of the non-aqueous electrolyte solution in the secondary battery. Since the first active material has a high Li content rate, when oxidative degradation of the non-aqueous electrolyte solution occurs, exchange between lithium ions and hydrogen ions is facilitated and structural changes of the first active material tend to occur. The structural changes of the first active material may lead to degradation of capacity of the secondary battery and may cause degradation of cycling performance. When the content of CNTs falls within the above-mentioned range, more hydrogen ions become adsorbed on the CNTs and the exchange reactions between lithium ions and hydrogen ions are reduced, so degradation of the cycling performance of the secondary battery tends to be reduced. In addition, CNTs supplement the electronic conductivity of the positive electrode active material, so when the content of CNTs falls within the above-mentioned range, degradation of charged capacity of the secondary battery can be reduced and volumetric energy density can be enhanced. When the content of CNTs is higher, the positive electrode active material layer has less pores and lithium ions can diffuse less, so charged capacity of the secondary battery tends to be degraded and volumetric energy density tends not to be enhanced. When the content of CNTs is lower, the CNTs cannot sufficiently supplement the electronic conductivity of the highly-resistant first active material, and thereby input-output properties of the secondary battery tend to be degraded.

The content of CNTs in the positive electrode active material layer relative to the total amount of the present positive electrode active material may be from 1.7 to 6.0 mass%, or may be from 2.0 to 5.0 mass%, or may be from 2.5 to 4.0 mass%.

Examples of the binder include fluororesins such as polyvinylidene difluoride (PVdF) and polytetrafluoroethylene (PTFE); polyacrylonitrile (PAN); polyimide; acrylic resins; polyolefin; cellulose-based resins such as carboxymethylcellulose (CMC), methylcellulose (MC), and hydroxypropylcellulose; polyethylene oxide (POE); and the like. The binder can include one, two, or more types of the above-mentioned binders.

The present positive electrode plate can be obtained by, for example, forming the positive electrode active material layer on the positive electrode current-collecting foil sheet. For example, a positive electrode composite material slurry including the present positive electrode active material is applied to the positive electrode current-collecting foil sheet, dried and compressed to form a positive electrode active material layer, and thus the present positive electrode plate is obtained. The positive electrode composite material slurry can include a binder, a conductive aid, and a solvent such as N-methyl-2-pyrrolidone (NMP), in addition to the present positive electrode active material.

### (Non-Aqueous Electrolyte Secondary Battery)

A non-aqueous electrolyte secondary battery according to the present embodiment (hereinafter also called "the present battery") has the present positive electrode plate. Since it has the present positive electrode plate, the present battery can have enhanced volumetric energy density and good input-output properties.

The present battery can comprise an electrode assembly that includes the positive electrode plate, as well as a non-aqueous electrolyte solution, and it may comprise a battery case for accommodating the electrode assembly and the non-aqueous electrolyte solution. The battery case may include an exterior package having an opening, and a sealing plate for sealing the opening. Each of the exterior package and the sealing plate is preferably made of metal, and can be formed by using aluminum, aluminum alloy, iron, iron alloy, or the like. Between the electrode assembly and the exterior package, a resin sheet may be provided as an electrode holder. Alternatively, the battery case may be made of a laminated film. The laminated film has a multilayer structure formed of a metal layer and a resin layer stacked on top of one another, for example. The edges of the laminated film can be fused together to form a pouch-shaped battery case.

The electrode assembly may include a negative electrode plate and a separator, in addition to the positive electrode plate. In the electrode assembly, the positive electrode active material layer of the positive electrode plate faces a negative electrode active material layer of the negative electrode plate, with the separator interposed therebetween. The electrode assembly may be a stack-type one that is formed by stacking the positive electrode plate, the negative electrode plate, and the separator, or may be a wound-type one that is formed by stacking the positive electrode plate, the negative electrode plate, and the separator and winding the resulting long stack. After the long stack is wound, the wound-type electrode assembly may be pressed into a flat shape.

The negative electrode plate usually has a negative electrode current-collecting foil sheet and a negative electrode active material layer. The negative electrode plate can have the negative electrode active material layer on one side or both sides of the negative electrode current-collecting foil sheet. The negative electrode current-collecting foil sheet is a metal foil sheet that is formed by using a copper material such as copper and copper alloy, for example. The negative electrode active material layer includes a negative electrode active material, and it further includes at least one of a conductive aid and a binder, preferably both a conductive aid and a binder.

The negative electrode active material includes at least one of a carbon-based active material and a metal-based active material, and it may include both a carbon-based active material and a metal-based active material. The carbon-based active material may be one or more carbon materials selected from the group consisting of graphite such as natural graphite and artificial graphite, hard carbon, soft carbon, and amorphous-coated graphite. The metal-based active material may be, for example, an elemental metal or a metal oxide including an element selected from the group consisting of silicon (Si), tin (Sn), antimony (Sb), bismuth (Bi), titanium (Ti), and germanium (Ge). Preferably, the metal-based active material is a Si-containing active material that contains silicon (Si). Preferably, the Si-containing active material includes one or more types selected from the group consisting of Si, SiOx (x=0.5 to 1.5), and SiC, and more preferably, it includes SiC or it is SiC. Preferably, SiOx is SiO.

The negative electrode active material preferably includes a carbon-based active material and a Si-containing active material. As a result, volumetric energy density of the present battery can be enhanced. The content of the Si-containing active material in the negative electrode active material relative to the total amount of the negative electrode active material is preferably from 3 to 15 mass%, more preferably from 5 to 15 mass%, and it may be from 5 to 10 mass%.

Examples of the conductive aid that may be included in the negative electrode active material layer include the conductive aids mentioned above that may be included in the positive electrode active material layer. Examples of the binder that may be included in the negative electrode active material layer include cellulose-based resins such as carboxymethylcellulose (CMC), methylcellulose (MC) and hydroxypropylcellulose; polyacrylic acid; styrene-butadiene rubber (SBR); and the like. The binder can include one, two, or more types among these. Examples of the conductive aid include those mentioned above, and the conductive aid can include one, two, or more types of the above-mentioned conductive aids.

The negative electrode plate can be obtained by, for example, forming the negative electrode active material layer on the negative electrode current-collecting foil sheet. For example, a negative electrode composite material slurry including the negative electrode active material is applied to the negative electrode current-collecting foil sheet, and dried and compressed to form a negative electrode active material layer, and thereby the negative electrode plate is obtained. The negative electrode composite material slurry can include a conductive aid, a binder, and a solvent such as water, in addition to the negative electrode active material.

The separator has a base material, and it may have a functional layer on at least one side of the base material. The base material can be a porous sheet such as a film or a nonwoven fabric, which is made of a resin such as polyolefin (such as polyethylene and polypropylene), polyester, cellulose, polyamide, and/or the like. The base material may have a monolayer structure, or may have a multilayer structure. Examples of the functional layer include an adhesive layer and a heat-resistant layer, and the functional layer can be either one of them, or both. The adhesive layer can be formed with an adhesive agent, for example. The heat-resistant layer can include a filler and a binder, for example.

The non-aqueous electrolyte solution is preferably obtained by adding an electrolyte to a non-aqueous solvent such as an organic solvent. Examples of the electrolyte include LiPF₆, LiBF₄, LiClO₄, LiFSO₃, LiBOB (lithium bis(oxalato)borate), and the like. The non-aqueous electrolyte solution may include one, two, or more electrolytes among these. Examples of the non-aqueous solvent include ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution can include one, two, or more non-aqueous solvents among these. The non-aqueous electrolyte solution may further include an additive such as vinylene carbonate (VC), vinylethylene carbonate (VEC), and fluoroethylene carbonate.

### [Examples]

In the following, the present disclosure will be described in further detail by way of Examples and Comparative Examples.

### [Preparation of Lithium-Rich Active Material (1)]

Active material (1X):
   [Composition] Li_{1.17}Ni_{0.13}Co_{0.13}Mn_{0.57}O₂
   [Form of particles] Secondary particles each consisting of 50 or more primary particles aggregated together (the average particle size was small)
Active material (1Y):
   [Composition] Li_{1.17}Ni_{0.13}Co_{0.13}Mn_{0.57}O₂
   [Form of particles] Secondary particles each consisting of 50 or more primary particles aggregated together (the average particle size was large)

### [Preparation of Active Material (2) with High Nickel Content Rate]

Active material (2X):
   [Composition] LiNi_{0.8}Co_{0.1}Mn_{0,1}O₂
   [Form of particles] Secondary particles each consisting of 50 or more primary particles aggregated together (the average particle size was large)
Active material (2Y):
   [Composition] LiNi_{0.8}Co_{0.1}Mn_{0.1}O₂
   [Form of particles] Secondary particles each consisting of 50 or more primary particles aggregated together (the average particle size was small)
Active material (2Z):
   [Composition] LiNi_{0.8}Co_{0.1}Mn_{0.1}O₂
   [Form of particles] At least one of single particles and second secondary particles each consisting of 2 to 10 primary particles aggregated together

### [Test Examples 1 to 13]

### (Preparation of Positive Electrode Active Material)

A positive electrode active material was prepared with the use of the active material (1) and the active material (2) specified in Table 1. The active material (1) and the active material (2) were mixed together in such a manner that the active material (1) was contained in the resulting positive electrode active material in the content as specified in Table 1.

### (Preparation of Positive Electrode Plate)

The positive electrode active material prepared in the above manner, carbon nanotubes (CNTs) as a conductive aid, polyvinylidene difluoride (PVdF) as a binder, and N-methyl-2-pyrrolidone (NMP) were mixed together, and thereby a positive electrode composite material slurry was obtained. The amount of CNTs used here relative to the active material (1) was as specified in Table 1, and the amount of PVdF was 1 part by mass relative to the amount of the positive electrode active material which was regarded as 100 parts by mass. The positive electrode composite material slurry was applied to an aluminum foil sheet as a positive electrode current-collecting foil sheet, dried and compressed to a certain thickness to form a positive electrode active material layer, and then the resultant was cut into a certain size, which was to be used as a positive electrode plate.

### (Preparation of Negative Electrode Plate)

A negative electrode active material was prepared by mixing graphite as a carbon-based active material and SiC as a Si-containing active material in a mass ratio of graphite:SiC=95:5. The resulting negative electrode active material as well as styrene-butadiene rubber (SBR) and carboxymethylcellulose (CMC) as binders were prepared in a mass ratio of (negative electrode active material):SBR:CMC=100:1:1, and water was mixed therein to form a negative electrode composite material slurry. The resulting negative electrode composite material slurry was applied to a copper foil sheet as a negative electrode current-collecting foil sheet, dried and compressed to a certain thickness to form a negative electrode active material layer, and then the resultant was cut into a certain size, which was to be used as a negative electrode plate.

### (Preparation of Battery Cell)

A separator having a double-layer structure was prepared, which had a base material made of polyethylene and a heat-resistant layer containing a filler and a binder formed on the base material. The positive electrode plate, the negative electrode plate, and the separator were stacked together in such a manner that the positive electrode active material layer of the positive electrode plate faced the negative electrode active material layer of the negative electrode plate with the separator interposed therebetween, the positive electrode active material layer was in contact with the heat-resistant layer of the separator, and the aluminum foil sheet of the positive electrode plate and the copper foil sheet of the negative electrode plate were exposed at both ends; and thereby an electrode assembly was obtained. The aluminum foil sheet of the positive electrode plate of the electrode assembly was welded to an aluminum plate for external current collection, and the copper foil sheet of the negative electrode plate of the electrode assembly was welded to a copper plate for external current collection, followed by inserting the electrode assembly into an exterior package made of an aluminum laminated film and fusing the film in such a manner to form a liquid inlet. A non-aqueous electrolyte solution was injected through the liquid inlet, and then the liquid inlet was sealed, followed by leaving the resultant to stand for 12 hours to obtain a battery cell.

The non-aqueous electrolyte solution was prepared by dissolving lithium hexafluorophosphate (LiPF₆) as an electrolyte in a concentration of 1.15 mol/L in a mixed solvent of ethylene carbonate (EC), ethyl methyl carbonate (EMC), and dimethyl carbonate (DMC) (EC:EMC:DMC=3:3:4 in volume).

### [Measurement of Average Particle Size (D50)]

The average particle size (D50) of each of the active material (1X), the active material (1Y), the active material (2X), the active material (2Y), and the active material (2Z) was measured with a laser-diffraction particle size distribution analyzer, and the ratio in average particle size between the active material (2) and the active material (1), namely, (average particle size (D50) of active material (2))/(average particle size (D50) of active material (1)) was calculated. Results are given in Table 1. The average particle size (D50) of the active material (1X) was within the range of 1 to 4 µm, and the average particle size (D50) of the active material (2X) was within the range of 2 to 15 µm.

### [Measurement of Volumetric Energy Density]

Discharged capacity of the battery cell was measured. Based on the discharged capacity of the battery cell thus measured, as well as the nominal voltage and the volume of the battery cell, volumetric energy density [Wh/L] of the battery cell was calculated by the equation below. Results are given in Table 1. Volumetric energy density [Wh/L]=(Energy capacity [Wh])/(Battery cell volume [L]) [In the equation, Energy capacity [Wh]=(Discharged capacity [Ah] of battery cell)×(Nominal voltage [V]).]

### [Evaluation of Input-Output Properties]

Under conditions at a temperature of 25°C, at a voltage within the range of 4.6 to 2.5 V, charging and discharging were carried out at 0.1 C, and the voltage at a state of charge (SOC) of 50% was measured. Each of charging and discharging was carried out at a voltage of SOC 50% for 10 seconds at a rate of 0.33 C, 0.5 C, 1 C, and 1.5 C, respectively, and from the difference in voltage between the time point at 0 second and the time point at 10 seconds at respective rates, the value of resistance was calculated. Results are given in Table 1.

### [Evaluation of Cycling Performance]

Under conditions at a temperature of 25°C, at a voltage within the range of 4.6 to 2.5 V, charging and discharging were carried out at 0.1 C, and the capacity during discharging was measured, which was regarded as the initial discharged capacity. Then, under conditions at a temperature of 25°C, at a voltage within the range of 4.6 to 2.5 V, 100 cycles of charging and discharging were carried out at 0.5 C. Subsequently, under conditions at a temperature of 25°C, at a voltage within the range of 4.6 to 2.5 V, charging and discharging were carried out at 0.1 C, and the capacity during discharging was measured, which was regarded as the post-cycling discharged capacity. By the equation below, capacity retention [%] was calculated. Results are given in Table 1. Capacity retention [%]=(Post-cycling discharged capacity)/(Initial discharged capacity)×100

**[Table 1]**

| Test Ex. | | Positive electrode active material layer | | | | | Evaluation | | |
|---|---|---|---|---|---|---|---|---|---|
| | | Positive electrode active material | | | | CNTs | Non-aqueous electrolyte secondary battery | | |
| | | Type | | Content of (1) ^{*1} [mass%] | Particle size ratio^{*2} (2)/(1) | Content^{*3} [mass%] | Volumetric energy density [Wh/L] | Input-output properties [Ω] | Cycling performance [%] |
| | | (1) | (2) | | | | | | |
| 1 | Comp. Ex. | (1Y) | (2Y) | 80 | 0.4 | 3.0 | 838 | 0.360 | 96 |
| 2 | Comp. Ex. | (1X) | (2Z) | 80 | 2.0 | 3.0 | 858 | 0.365 | 97 |
| 3 | Ex. | (1X) | (2X) | 80 | 2.4 | 3.0 | 865 | 0.351 | 96 |
| 4 | Ex. | (1X) | (2X) | 80 | 2.5 | 3.0 | 865 | 0.349 | 96 |
| 5 | Ex. | (1X) | (2X) | 80 | 4.0 | 3.0 | 865 | 0.335 | 96 |
| 6 | Ex. | (1X) | (2X) | 64 | 4.0 | 3.0 | 848 | 0.323 | 95 |
| 7 | Ex. | (1X) | (2X) | 65 | 4.0 | 3.0 | 851 | 0.325 | 95 |
| 8 | Ex. | (1X) | (2X) | 90 | 4.0 | 3.0 | 870 | 0.348 | 96 |
| 9 | Ex. | (1X) | (2X) | 91 | 4.0 | 3.0 | 872 | 0.351 | 96 |
| 10 | Ex. | (1X) | (2X) | 80 | 4.0 | 2.6 | 865 | 0.345 | 94 |
| 11 | Ex. | (1X) | (2X) | 80 | 4.0 | 2.7 | 865 | 0.344 | 95 |
| 12 | Ex. | (1X) | (2X) | 80 | 4.0 | 5.4 | 853 | 0.333 | 96 |
| 13 | Ex. | (1X) | (2X) | 80 | 4.0 | 5.5 | 848 | 0.332 | 96 |

| | | | | | | | | | |
|---|---|---|---|---|---|---|---|---|---|
| *1: The content of the active material (1) relative to the positive electrode active material (the latter is defined as 100 mass%) *2: (Average particle size (D50) of active material (2))/(Average particle size (D50) of active material (1)) *3: (Content [parts by mass] of CNTs in positive electrode active material layer)(Content [parts by mass] of active material (1) in positive electrode active material layer)×100 | | | | | | | | | |

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A positive electrode active material comprising:
a first active material represented by a formula (I) below; and
a second active material represented by a formula (II) below, wherein
each of the first active material and the second active material is secondary particles each consisting of 50 or more primary particles aggregated together, and
an average particle size (D₁50) of the first active material is smaller than an average particle size (D₂50) of the second active material:
Li₁₊ₐ₁Niₓ₁Mn_{y1}M1_{z1}O₂ (I)
Li₁₊ₐ₂Niₓ₂Mn_{y2}M2_{z2}O₂ (II)
where
M1 and M2 are independently one or more metallic elements selected from the group consisting of Co, Al, Mg, Ca, Ti, V, Cr, Fe, Cu, Zn, Zr, Nb, Mo, Ta, and W,
0.13≤a1≤0.33, 0≤x1≤0.3, 0.47≤y1≤0.67, 0≤z1≤0.3, and a1+x1+y1+z1=1 are satisfied, and
-0.1≤a2≤0.1, 0.6≤x2≤1, 0≤y2≤0.3, 0≤z2≤0.3, and a2+x2+y2+z2=1 are satisfied.

2. The positive electrode active material according to claim 1, wherein the average particle size (D₁50) of the first active material is from 1 to 4 µm.

3. The positive electrode active material according to claim 1 or 2, wherein the average particle size (D₂50) of the second active material is from 2 to 15 µm.

4. The positive electrode active material according to any one of claims 1 to 3, wherein a ratio (D₂50/D₁50) of the average particle size (D₂50) of the second active material to the average particle size (D₁50) of the first active material is 2 or more.

5. The positive electrode active material according to any one of claims 1 to 4, wherein a content of the first active material is from 60 to 95 mass%.

6. A positive electrode plate comprising a positive electrode active material layer including the positive electrode active material according to any one of claims 1 to 5.

7. The positive electrode plate according to claim 6, wherein
the positive electrode active material layer further includes carbon nanotubes, and
a content of the carbon nanotubes relative to a total amount of the first active material in the positive electrode active material layer is from 2 to 6 mass%.

8. A non-aqueous electrolyte secondary battery comprising an electrode assembly, wherein
the electrode assembly has the positive electrode plate according to claim 6 or 7.

9. The non-aqueous electrolyte secondary battery according to claim 8, wherein
the electrode assembly further has a negative electrode plate having a negative electrode active material layer,
the negative electrode active material layer includes a negative electrode active material, and
the negative electrode active material includes a carbon-based active material and a Si-containing active material.

10. The non-aqueous electrolyte secondary battery according to claim 9, wherein a content of the Si-containing active material in the negative electrode active material relative to a total amount of the negative electrode active material is from 3 to 15 mass%.

11. The non-aqueous electrolyte secondary battery according to claim 9 or 10, wherein the Si-containing active material is one or more types selected from the group consisting of Si, SiOx (x=0.5 to 1.5), and SiC.
